# EUROPEAN PATENT APPLICATION

(11) **EP 4 661 134 A1**
(43) Date of publication of application: **10.12.2025**
(21) Application number: 24749696.1
(22) Date of filing: 31.01.2024
(51) Int. Cl.: H01M 10/0525, H01M 4/133

(54) **BATTERY ASSEMBLY AND ELECTRIC DEVICE**

(30) Priority: 31.01.2023 CN 202310084187
(71) Applicant: BYD Company Limited, Shenzhen, Guangdong 518118 (CN)
(72) Inventor: GAO, Tianji, Shenzhen, Guangdong 518118 (CN); MA, Yongjun, Shenzhen, Guangdong 518118 (CN); GUO, Zizhu, Shenzhen, Guangdong 518118 (CN); YAN, Peng, Shenzhen, Guangdong 518118 (CN); JIA, Minyi, Shenzhen, Guangdong 518118 (CN)
(74) Representative: Mathys & Squire
(86) International application number: PCT/CN2024/074840
(87) International publication number: WO 2024/160217

(57) **Abstract**

The present application provides a battery assembly and an electric device. The battery assembly comprises first batteries and second batteries; the first batteries expand during charging and contract during discharging; and the second batteries contract during charging and expand during discharging. The battery assembly can effectively solve the problem of capacity attenuation caused by excessive volume change or excessive pressure change of batteries during charging and discharging, and can be used for providing an electric device having long battery life and continuous and stable battery life.

## Description

### CROSS-REFERENCE TO RELATED APPLICATIONS

The present disclosure claims priority to Chinese Patent Application No. 202310084187.7 filed on January 31, 2023, entitled "BATTERY ASSEMBLY AND ELECTRIC DEVICE ", which is incorporated herein by reference in its entirety.

### FIELD

The present disclosure relates to the field of battery technology, and particularly to a battery assembly and an electric device.

### BACKGROUND

In response to present consumers' "range anxiety" towards new energy vehicles, more and more manufacturers are installing high-energy density batteries in their vehicles. Generally speaking, high-capacity negative electrode materials such as lithium metal, lithium alloy, or silicon-based composite materials can be selected to enhance the energy density of batteries. However, the volume change rate of the battery cells during charging and discharging is usually very large, and after multiple cycles, problems such as serious electrode polarization and electrolyte leakage are highly prone to occur.

A battery pack containing a plurality of battery cells can limit the volume expansion of its internal battery cells with a housing, but the improvement effect is limited. As the number of cycles increases, the housing will also deform, leading to a decrease in battery capacity or even scrapping; if the restraining force of the housing on the battery cells is further increased, it will be difficult for the electrolyte to immerse the negative electrode, which will suppress the capacity of the battery assembly.

### SUMMARY

In view of this, the present disclosure provides a battery assembly and an electric device, which can effectively solve the capacity attenuation problem caused by excessive volume change or excessive internal pressure change of the battery during charging and discharging.

According to a first aspect, the present disclosure provides a battery assembly, including:
a first battery expanding during charging and contracting during discharging; and
a second battery contracting during charging and expanding during discharging.

The battery assembly includes two types of batteries with opposite expansion characteristics during charging and discharging, so the volume change or pressure change of the entire battery assembly during charging and discharging can be reduced by expansion hedging, thereby the long cycle performance of the battery assembly can be maintained as long as a small constraint force is applied to the battery assembly, and a hardware foundation is provided for controlling the charging and discharging program of the battery assembly by setting a battery management system to control the internal pressure volume change rate of the battery assembly within a small range for a long time.

In some embodiments, the first battery includes a first positive electrode and a first negative electrode, the first negative electrode including a first negative electrode active material, and the first negative electrode active material including at least one of elemental lithium, lithium alloy, and silicon-based negative electrode material.

In some embodiments, the first positive electrode includes a first positive electrode active material, and the first positive electrode active material includes one or more of layered oxide and polyanion material.

In some embodiments, the second battery includes a second positive electrode and a second negative electrode, the second positive electrode including a second positive electrode active material, the second positive electrode active material including one or more of elemental sulfur and sulfur-containing compound, the sulfur-containing compound including one or more of Li₂S, MosS₈, CuS, MnS, FeS₂, CoS₂, NiS₂, Fe_{0.5}Co_{0.5}S₂, and sulfurized polyacrylonitrile; and
the second negative electrode includes a second negative electrode active material, the second negative electrode active material including elemental lithium and/or lithium alloy; wherein the lithium alloy includes one or more of lithium boron alloy, lithium magnesium alloy, lithium aluminum alloy, lithium tin alloy, lithium germanium alloy, lithium gallium alloy, lithium indium alloy, lithium antimony alloy, lithium indium alloy, lithium zinc alloy, lithium lead alloy, lithium bismuth alloy.

In some embodiments, the first battery and the second battery both contain an electrolyte, the electrolyte in the first battery and the second battery both including a solvent, the solvent of the electrolyte in the first battery and the solvent of the electrolyte in the second battery each independently including an ether solvent, the ether solvent including at least one of non-halogenated ether solvent and fluorinated ether solvent;
the non-halogenated ether solvent includes one or more of diethylene glycol dimethyl ether, ethylene glycol dimethyl ether, dipropylene glycol dimethyl ether, tripropylene glycol monomethyl ether, and tetraethylene glycol dimethyl ether; and the fluorinated ether solvent includes 1,1,2,2,-tetrafluoroethyl ether, 1,1,2,2,-tetrafluoroethyl-2,2,3,3-tetrafluoropropyl ether, hexafluoroisopropyl ether, tetrafluoroethyl tetrafluoropropyl ether, 2,2,2-trifluoroethyl ether, 1,1,2,2-tetrafluoroethyl-2,2,2-trifluoroethyl ether, difluoromethyl-2,2,3,3-tetrafluoropropyl ether, 2,2,3,3,3-pentafluoropropyl ether, 1,1,2,3,3,3-hexafluoropropyl ethyl ether, 1,1,2,3,3,3-pentafluoropropyl difluoromethyl ether, 1,1,2,2-tetrafluoroethyl-2,2,3,3-tetrafluoropropyl ether, 1H, 1H,5H-octafluoropentyl-1, 1,2,2-tetrafluoroethyl ether, bis(2,2,2-trifluoroethyl) ether, and bis(2,2-difluoroethyl) ether.

In some embodiments, the battery assembly includes a plurality of the first batteries connected in series, and/or a plurality of the second batteries connected in series.

In some embodiments, the first battery and the second battery are arranged alternately.

In some embodiments, the battery assembly is formed with a receiving cavity, the receiving cavity including a first sub-receiving cavity and a second sub-receiving cavity, the first battery being arranged in the first sub-receiving cavity, and the second battery being arranged in the second sub-receiving cavity.

In some embodiments, the battery assembly is formed with a receiving cavity, the battery assembly including at least one first battery system and at least one second battery system, each first battery system including a plurality of the first batteries, each second battery system including a plurality of the second batteries, and the at least one first battery system and the at least one second battery system being arranged in the receiving cavity.

In some embodiments, the battery assembly further includes:
a detection device configured to detect a predetermined parameter to obtain a pressure of the first battery and/or the second battery; and
a battery management system configured to regulate a charging strategy and/or a discharging strategy of the first battery and/or the second battery according to the pressure.

In some embodiments, the battery assembly includes a housing, and the first battery and the second battery are arranged in the housing; and the detection device is arranged between the first battery and/or the second battery and the housing, and/or between the first battery and the second battery.

In some embodiments, the detection device is a pressure sensor configured to monitor the pressure generated by an expansion force of the first battery and/or the second battery.

In some embodiments, during charging and discharging of the battery assembly, the battery management system is configured to adjust a state of charge of the first battery and/or the second battery according to the pressure, to ensure that the pressure is less than a preset threshold.

In some embodiments, when the first battery and the second battery are simultaneously charged, and when the pressure reaches a first preset threshold, the battery management system is configured to stop charging the first battery, or to reduce a charging current of the first battery; and/or to increase a charging current of the second battery.

In some embodiments, when the first battery and the second battery are simultaneously discharged, and when the pressure reaches a second preset threshold, the battery management system is configured to stop discharging the second battery, or to reduce a discharging current of the second battery; and/or to increase a discharging current of the first battery.

In some embodiments, charging the battery assembly includes the following steps:
(1) when the pressure value of the battery assembly reaches the first preset threshold during the charging of the first battery, the battery management system is configured to stop charging the first battery;
(2) when the pressure value of the battery assembly is lower than a third preset threshold during the charging of the second battery, the battery management system is configured to stop charging the second battery and recharge the first battery again;
the step (1) and the step (2) being repeated until the state of charge of the battery assembly reaches a preset value.

In some embodiments, charging the battery assembly includes the following steps:
(a) charging the second battery; and
(b) charging the first battery; and when the pressure value of the battery assembly reaches a first preset threshold, the battery management system is configured to stop charging the first battery; and cycling the step (a) and the step (b) until the state of charge of the battery assembly reaches a preset value.

In some embodiments, the first battery has a cycle life longer than that of the second battery, and the battery management system controls the first battery to be discharged preferentially to the second battery.

In some embodiments, the pressure inside the battery assembly is constant during charging and discharging of the battery assembly.

According to a second aspect, the present disclosure provides an electrical device, including the battery assembly provided in the first aspect of the present disclosure.

### BRIEF DESCRIPTION OF THE DRAWINGS

FIG. 1 is a structural schematic diagram of a battery assembly according to an embodiment of the present disclosure;
FIG. 2 is another structural schematic diagram of a battery assembly according to an embodiment of the present disclosure;
FIG. 3 is another structural schematic diagram of a battery assembly according to an embodiment of the present disclosure;
FIG. 4 is another structural schematic diagram of a battery assembly according to an embodiment of the present disclosure;
FIG. 5 is a structural schematic diagram of an electrical device according to an embodiment of the present disclosure.

### DETAILED DESCRIPTION

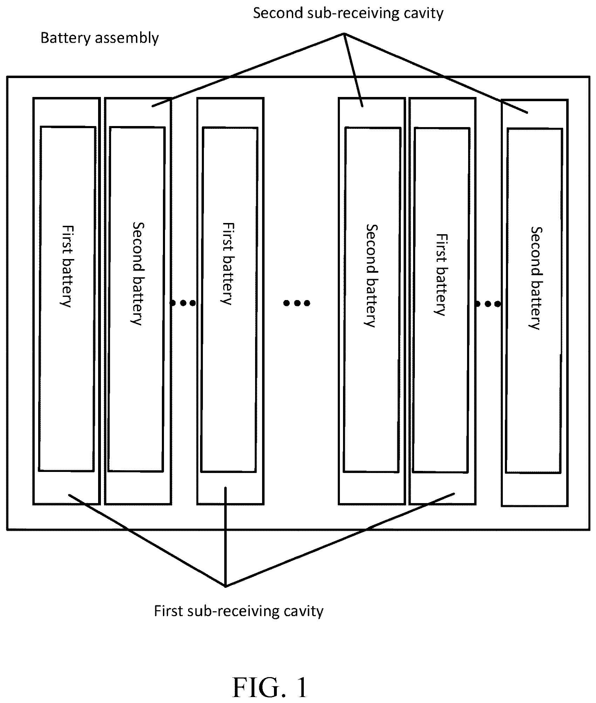

Referring to FIG. 1, an embodiment of the present disclosure provides a battery assembly, including a first battery and a second battery.

The first battery expands during charging and contracts during discharging; the second battery contracts during charging and expands during discharging.

In the present disclosure, the first battery and the second battery both refer to a unit cell.

In the present disclosure, the battery assembly may refer to a battery module or a battery pack.

It is understandable that a commercial battery assembly generally accommodates the battery in a housing to protect the battery and limit the volume expansion of the battery during the charging and discharging process, so when a positive electrode material or a negative electrode material of the battery expands in volume during the charging and discharging process, although it can limit the volume expansion of the battery, it will still cause a sharp change in the internal pressure of the battery, and excessive or insufficient pressure will affect the flow of electrolyte and ions inside the battery. In the present disclosure, the expansion characteristics of the first battery and the second battery during the charging and discharging process are opposite, so when the two kinds of batteries are arranged in the same battery assembly at the same time, the volume change rate or the internal pressure change of the entire battery assembly during the charging and discharging process can be significantly reduced by expansion hedging, thereby solving the problem that the battery performance is damaged or even scrapped due to the housing deformation easily occurring during the charging and discharging process of the battery assembly, and then significantly improving the cycling performance and service life of the battery assembly. At the same time, because the battery inside can achieve the "expansion hedging" during the charging and discharging process, the battery assembly as a whole will not expand greatly in volume and the internal pressure will not change greatly during the charging and discharging process, so as long as a small constraint force is applied to the battery assembly, the long cycle performance of the battery assembly can be maintained at a good level, and the problem of an excessive restraining force inhibiting the battery capacity is also avoided. More importantly, the charging and discharging states of the first battery and the second battery can be adjusted in real time, so compared with a battery assembly composed of a single battery type, the battery assembly provides a hardware foundation for regulating the charging and discharging states to control the volume expansion rate of the entire battery assembly or the internal pressure (for example, an expansion force) change of the battery assembly within a small range for a long time, therefore, the battery assembly can be regulated to be below the volume expansion rate threshold or the expansion force threshold of the battery assembly when electrode polarization and electrolyte leakage occur during the charging and discharging cycle process, thereby the electrolyte leakage and serious electrode polarization of the battery assembly can be avoided to the greatest extent possible. Therefore, the battery assembly can be used to provide a vehicle with continuously high endurance.

In the present disclosure, "expansion" and "contraction" will be understood as obvious changes in the volume of the battery, or as a situation where the available space for expansion is limited and the volume of the battery does not change significantly, but the change in the expansion force of the battery can be monitored by certain means.

In some embodiments of the present disclosure, the first battery includes a first positive electrode and a first negative electrode. Taking the first positive electrode and the first negative electrode as a first positive electrode plate and a first negative electrode plate respectively for example, the first battery includes the first positive electrode plate and the first negative electrode plate. The first negative electrode plate includes a first negative electrode active material, which includes, but is not limited to, at least one of elemental lithium, lithium alloy, and silicon-based negative electrode material. Elemental lithium, lithium alloy and silicon-based negative electrode material are common negative electrode active materials in the field with high specific capacity and large negative electrode expansion rate during charging. Therefore, using the materials as negative electrode active materials is conducive to providing a battery assembly with higher energy density, and further conducive to providing a battery assembly with high energy density and long service life.

In the present disclosure, the lithium alloy includes, but is not limited to, one or more of lithium boron alloy, lithium magnesium alloy, lithium aluminum alloy, lithium tin alloy, lithium germanium alloy, lithium gallium alloy, lithium indium alloy, lithium antimony alloy, lithium indium alloy, lithium zinc alloy, lithium lead alloy, lithium bismuth alloy. The silicon-based material can include, but is not limited to, one or more of elemental silicon, silicon oxide, silicon-based non-lithium alloy (such as silicon germanium alloy, silicon magnesium alloy, silicon copper alloy, silicon iron alloy, etc.), silicon-carbon composite material, or other silicon compounds.

In some embodiments of the present disclosure, the first positive electrode plate includes a first positive electrode active material, which includes, but is not limited to, one or more of layered oxide, polyanion material, etc. Exemplarily, the first positive electrode active material includes, but is not limited to, at least one of lithium cobalt oxide, lithium manganese oxide, lithium iron phosphate, lithium nickel cobalt aluminum oxide (NCA) and lithium nickel manganese cobalt oxide (NMC), lithium manganese phosphate, lithium manganese iron phosphate, lithium iron silicate, lithium manganese silicate, lithium vanadium phosphate, etc.

In some embodiments of the present disclosure, the second battery includes a second positive electrode and a second negative electrode. Taking the second positive electrode and the second negative electrode as a second positive electrode plate and a second negative electrode plate respectively for example, the second battery includes the second positive electrode plate and the second negative electrode plate. The second positive electrode plate includes a second positive electrode active material, which includes one or more of elemental sulfur and a sulfur-containing compound. In some specific embodiments, the second negative electrode plate includes a second negative electrode active material, which includes, but is not limited to, elemental lithium and/or lithium alloy. It will be understood that the second battery is generally a lithium-sulfur battery cell, which contracts in volume during charging and expands in volume during discharging. In addition, the lithium-sulfur battery cell has a large energy density, which can ensure a high energy density of the final battery assembly.

In the present disclosure, the sulfur-containing compound may include, but is not limited to, one or more of Li₂S, Mo₆S₈, CuS, MnS, FeS₂, CoS₂, NiS₂, Fe_{0.5}Co_{0.5}S₂, and sulfurized polyacrylonitrile (SPAN), etc. The lithium alloy in the second negative electrode active material includes, but is not limited to, one or more of lithium boron alloy, lithium magnesium alloy, lithium aluminum alloy, lithium tin alloy, lithium germanium alloy, lithium gallium alloy, lithium indium alloy, lithium antimony alloy, lithium indium alloy, lithium zinc alloy, lithium lead alloy, lithium bismuth alloy.

In some embodiments of the present disclosure, the first battery and the second battery both contain an electrolyte, and the electrolyte includes a solvent. Among them, the solvent of the electrolyte in the first battery and the second battery each independently includes an ether solvent, which may specifically include at least one of a non-halogenated ether solvent and a fluorinated ether solvent. A carbonate solvent commonly used in the prior art has a fast side reaction with metal lithium negative electrodes, sharp lithium dendrite is prone to generating at the negative electrode of the battery to pierce the battery separator, and cause the battery to self-ignite. The ether solvent has good compatibility with the metal lithium, and the side reaction between the ether solvent and the lithium metal is much lower than the side reaction between the carbonate solvent and the lithium metal. The ether solvent can effectively inhibit the consumption of active lithium during the cycling process, improve the uniformity and compactness of lithium ion deposition, and avoid the formation of the sharp lithium dendrite to pierce the battery separator and cause safety risks.

In some embodiments of the present disclosure, the non-halogenated ether solvent includes, but is not limited to, one or more of diethylene glycol dimethyl ether, ethylene glycol dimethyl ether, dipropylene glycol dimethyl ether, tripropylene glycol monomethyl ether, and tetraethylene glycol dimethyl ether. The fluorinated ether solvent includes, but is not limited to, one or more of 1,1,2,2,-tetrafluoroethyl ether, 1,1,2,2,-tetrafluoroethyl-2,2,3,3-tetrafluoropropyl ether, hexafluoroisopropyl ether, tetrafluoroethyl tetrafluoropropyl ether, 2,2,2-trifluoroethyl ether, 1,1,2,2-tetrafluoroethyl-2,2,2-trifluoroethyl ether, difluoromethyl-2,2,3,3-tetrafluoropropyl ether, 2,2,3,3,3-pentafluoropropyl ether, 1,1,2,3,3,3-hexafluoropropyl ethyl ether, 1,1,2,3,3,3-pentafluoropropyl difluoromethyl ether, 1,1,2,2-tetrafluoroethyl-2,2,3,3-tetrafluoropropyl ether, 1H, 1H,5H-octafluoropentyl-1, 1,2,2-tetrafluoroethyl ether, bis(2,2,2-trifluoroethyl) ether, and bis(2,2-difluoroethyl) ether.

In some embodiments of the present disclosure, the electrolyte of the first battery and the electrolyte of the second battery each include a lithium salt. The lithium salt in the electrolyte of the first battery and the electrolyte of the second battery each independently includes, but is not limited to, one or more of lithium difluorosulfimide (LiN(SO₂F)₂), lithium bis(trifluoromethylsulfonyl)imide (Li(CF₃SO₂)₂N), lithium bis-perfluoroethylsulphonylimide (Li(C₂F₅SO₂)₂N), lithium bisoxalate borate (LiB(C₂O₄)₂, LiBOB), lithium trifluoromethanesulfonate (LiCF₃SO₃), lithium perfluorobutane sulfonate (LiC₄F₉SO₃), lithium tris-trifluoromethylsulfonylmethide (LiC(CF₃SO₂)₃), etc.

In some embodiments of the present disclosure, the battery assembly includes a plurality of first batteries connected in series and/or a plurality of second batteries connected in series, and the first battery and the second battery can each independently be a soft package battery or a hard-shell battery. In this way, the charging and discharging program is more conducive to regulation and control, and with the aid of the "aggregation effect", a plurality of first batteries and a plurality of second batteries are controlled simultaneously, the volume change effect or the pressure change inside the battery assembly during charging and discharging is more obvious, so the charging and discharging program of the battery assembly is more conducive to regulation and control, thereby the volume change or the internal pressure change of the battery assembly during charging and discharging is more conducive to accurate control, the pressure between all unit cells of the battery assembly as a whole and adjacent components (such as a housing, a side plate, etc.) can be better regulated and controlled to be in a long-term equilibrium state, and a battery assembly with better long cycle performance and a longer service life is more conducive to being provided.

In the present disclosure, the ratio of the number of the first batteries to the number of second batteries in the battery assembly is not limited. Considering that the different expansion characteristics of the two types of batteries are essentially dependent on the different specific compositions of the batteries, the energy density, the endurance time, the cycle number, and the degree of volume change between the first battery and the second battery can be different, and the characteristics between the first battery composed of different positive and negative electrode material and the characteristics between the second battery composed of different positive and negative electrode material are also different, so those skilled in the art can regulate and control according to actual production needs.

In some embodiments of the present disclosure, the first battery and the second battery are arranged alternately in sequence. Specifically, it can be one first battery and one second battery arranged alternately, or a plurality of first batteries and one second battery arranged alternately, or one first battery and a plurality of second batteries arranged alternately, or a plurality of first batteries and a plurality of second batteries arranged alternately.

In the present disclosure, when the battery assembly is a battery pack, the battery assembly may include a battery module (battery assembly with module) or may not include a battery module (battery assembly without module). Among them, the battery assembly with module includes structural parts (e.g., frame, cell support, etc.) and functional parts (e.g., battery management system); compared with a battery module, the battery assembly without module may omit part of the structural parts or does not include the structural parts, and only includes the functional parts. A sub-receiving cavity or a cavity is arranged in the housing for receiving the battery to define and fix the position of the battery. In some embodiments of the present disclosure, the battery assembly is formed with a receiving cavity, and the receiving cavity includes a first sub-receiving cavity and a second sub-receiving cavity. The first sub-receiving cavity and the second sub-receiving cavity can be partially or fully separated by an elastic separator.

The first battery is arranged in the first sub-receiving cavity, the second battery is arranged in the second sub-receiving cavity, and the battery assembly is a battery assembly without module. Compared with the battery assembly with module, the battery assembly without module has higher volume utilization, higher system energy density of the battery assembly, higher production efficiency, and lower production cost.

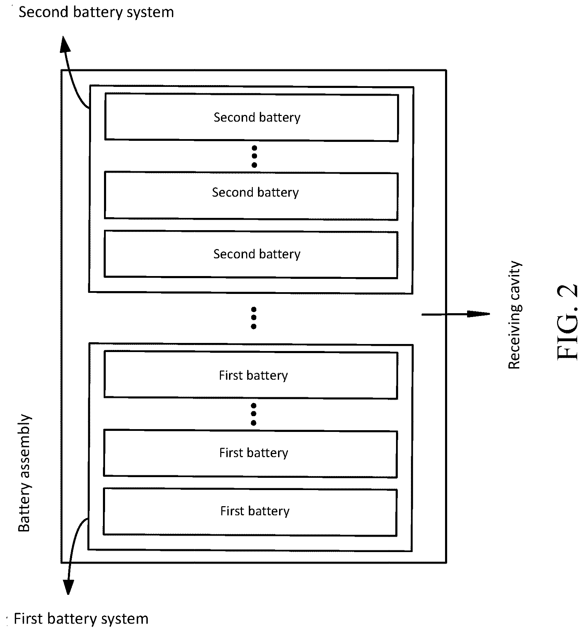

In some embodiments of the present disclosure, a plurality of first batteries and a plurality of second batteries are directly placed in the receiving cavity to form the battery assembly. In other embodiments, as shown in FIG. 2, a plurality of first batteries are first formed into a first battery system, and a plurality of second batteries are first formed into a second battery system. At least one first battery system and at least one second battery system are placed in the receiving cavity to form the battery assembly provided in the embodiments of the present disclosure. In this way, each battery system includes a plurality of batteries, and each battery system can achieve an "aggregation effect". The volume change effect of the first battery system and the second battery system during charging and discharging is more obvious, or the pressure change feedback inside the battery assembly is more obvious, so the charging and discharging program of the battery assembly is more conducive to regulation and control. Therefore, it is more conducive to accurately control the volume change of the battery assembly during the charging and discharging process or keep the pressure change inside the battery assembly in a long-term equilibrium state, and furthermore conducive to providing a battery assembly with better long cycle performance and a longer service life. In some specific embodiments, in the first battery system, a plurality of first batteries are connected in series; and in the second battery system, a plurality of second batteries are connected in series. In some embodiments, a baffle is arranged between the first battery system and the second battery system.

In the present disclosure, the series-parallel connection relationship between the first battery and the second battery in the battery assembly is not limited. Similarly, the series-parallel connection relationship between the first battery system and the second battery system is not limited. When the battery assembly contains a plurality of first battery systems and a plurality of second battery systems, the series-parallel connection relationship between a plurality of first battery systems and a plurality of second battery systems is not limited. Those skilled in the art can select according to actual requirements.

In some embodiments of the present disclosure, the battery assembly further includes:
a detection device configured to detect a predetermined parameter to obtain a pressure of the first battery and/or the second battery; and
a battery management system (BMS) is configured to regulate a charging strategy and/or a discharging strategy of the first battery and/or the second battery according to the pressure.

The detection device includes a device for detecting the pressure and other parameters of the first battery and/or the second battery. The pressure of the first battery and/or the second battery will be understood as the constraint force exerted on them by external factors (such as battery adjacent to the battery, separator and housing). In some embodiments, the detection device includes a pressure sensor that can monitor the pressure generated by the expansion force of the first battery and/or the second battery in real time, so as to obtain the change of the pressure by the change of the expansion force and feed back to the battery management system, the battery management system can regulate the charging and discharging state of the battery assembly in real time through the program, thereby realizing the accurate regulation and control of the volume change of the battery assembly in the charging and discharging process, greatly reducing or even avoiding the volume change of the battery assembly in the charging and discharging process. Therefore, the battery assembly can realize long-time stable operation, has a long service life and high safety performance. In some embodiments, the detection device may be a strain measurement device, etc.

In some embodiments of the present disclosure, "obtaining a pressure of the first battery and/or the second battery" may be obtaining the pressure of the first battery and/or the second battery in the thickness direction of the electrode plate. Since the thickness direction of the electrode plate is the main direction of expansion or contraction of the battery during charging and discharging, the pressure in the thickness direction of the electrode plate can more sensitively reflect the expansion or contraction of the battery. In the present disclosure, the number of the first batteries in the battery assembly can be one or more, and the number of the second batteries can be one or more. "The detection device includes a device for detecting the pressure and other parameters of the first battery and/or the second battery" will be understood as follows: when the battery assembly includes only one first battery and one second battery, the detection device includes a device for detecting the pressure and other parameters of the one first battery and/or the one second battery; when the battery assembly includes a plurality of first batteries and a plurality of second batteries, the detection device includes a device for detecting the pressure and other parameters of at least one first battery and/or at least one second battery; when the battery assembly includes a plurality of first batteries and one second battery, the detection device includes a device for detecting the pressure and other parameters of at least one first battery and/or the one second battery; and when the battery assembly includes one first battery and a plurality of second batteries, the detection device includes a device for detecting the pressure and other parameters of the one first battery and/or at least one second battery. "A battery management system is configured to regulate a charging strategy and/or a discharging strategy of the first battery and/or the second battery according to the pressure" will be understood as follows: when the battery assembly includes only one first battery and one second battery, the battery management system is configured to adjust the charging strategy and/or the discharging strategy of the one first battery and/or the one second battery according to the pressure; when the battery assembly includes a plurality of first batteries and a plurality of second batteries, the battery management system is configured to adjust the charging strategy and/or the discharging strategy of at least one first battery and/or at least one second battery according to the pressure; when the battery assembly includes a plurality of first batteries and one second battery, the battery management system is configured to adjust the charging strategy and/or the discharging strategy of at least one first battery and/or the one second battery according to the pressure; and when the battery assembly includes one first battery and a plurality of second batteries, the battery management system is configured to adjust the charging strategy and/or the discharging strategy of the one first battery and/or at least one second battery according to the pressure. Adjusting the charging strategy and/or the discharging strategy is to regulate the volume change rate of the battery as a whole in the battery assembly during the charging and discharging process. It will be understood that the first battery and/or second battery under pressure detection may be the same or different from the first battery and/or second battery under regulated charging strategy and/or the discharging strategy.

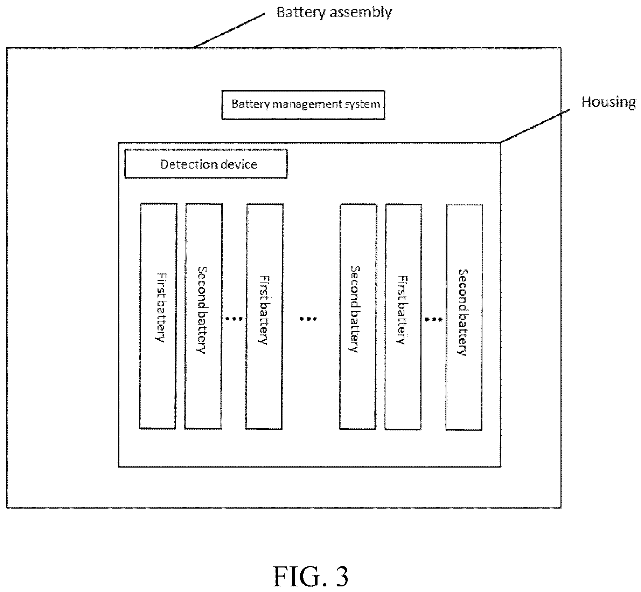

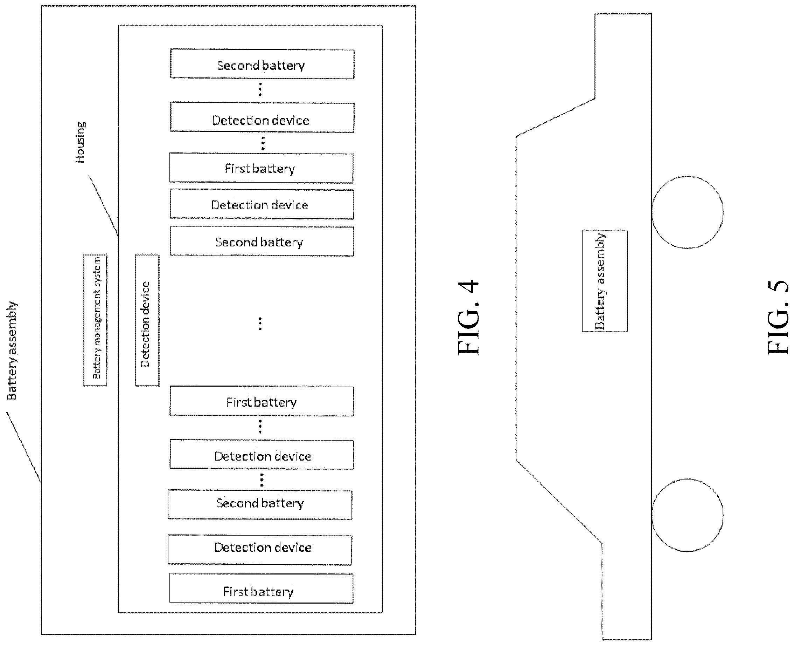

In some embodiments of the present disclosure, the battery assembly has a housing, and the detection device may be arranged at one or both ends of the housing, or may be arranged on one or both sides of each battery, or may be arranged on a separator (if any) between the first battery system and the second battery system, or may be arranged on both ends of the battery assembly and the separator. Those skilled in the art can select according to the actual production and use needs. In some embodiments of the present disclosure, the first battery and the second battery are arranged in the housing; the detection device is arranged between the first battery and/or the second battery and the housing (as shown in FIG. 3), and/or is arranged between the first battery and the second battery in the battery assembly (as shown in FIG. 4).

In some embodiments of the present disclosure, the battery assembly further includes a signal acquisition device, which is configured to collect and feed back the predetermined parameters to the battery management system. In some specific embodiments, the signal acquisition device transmits data by wireless transmission.

In some embodiments of the present disclosure, the battery management system adjusts the state of charge (SOC) of the first battery and/or the second battery according to the pressure of the first battery and/or the second battery during the charging and discharging of the battery assembly, to ensure that the pressure value of the battery assembly is less than the preset threshold. In this way, the charging and discharging state of the battery assembly may be flexibly regulated according to the real-time volume change rate of the battery assembly, the long-term cycle stability of the battery assembly may be significantly improved, and the service life of the battery assembly may be extended. Among them, "adjusting the state of charge (SOC) of the first battery and/or the second battery according to the pressure of the first battery and/or the second battery" will be understood as follows: when the battery assembly includes only one first battery and one second battery, the state of charge of the first battery and/or the second battery is adjusted according to the pressure of the first battery and/or the second battery; when the battery assembly includes a plurality of first batteries and a plurality of second batteries, the state of charge of at least one first battery and/or at least one second battery is adjusted according to the pressure of the at least one first battery and/or the at least one second battery; and when the battery assembly includes a plurality of first batteries and one second battery, the state of charge of at least one first battery and/or the second battery is adjusted according to the pressure of the at least one first battery and/or the second battery. It is understandable that the battery whose state of charge is adjusted can be the same as or different from the battery whose pressure is measured.

In some embodiments of the present disclosure, when the pressure value reaches the first preset threshold during the charging of the first battery and the second battery simultaneously, the battery management system is configured to stop charging the first battery, or to reduce the charging current of the first battery; and/or to increase the charging current of the second battery. Exemplarily, when the pressure value reaches the first preset threshold, the following options can be selected: (1) stop charging the first battery; (2) stop charging the first battery, and increase the charging current of the second battery; (3) reduce the charging current of the first battery; (4) reduce the charging current of the first battery, and increase the charging current of the second battery; or (5) do not adjust the charging state of the first battery, and increase the charging current of the first battery. In some specific embodiments, when the charging current of the first battery is reduced and the charging current of the second battery is increased, the total charging current of the battery assembly is controlled to be constant during the charging process.

It will be understood that after the charging strategy is adjusted, the internal pressure of the battery assembly is reduced, but if the internal pressure of the battery assembly is too low, the battery management system may control the first battery to be charged again or the charging current of the first battery to be increased; and/or the charging current of the second battery to be reduced or the second battery to be stopped charging. Specifically, as an example, the following options can be selected:
(1) the first battery and the second battery are charged simultaneously, when the pressure value reaches the first preset threshold, the battery management system controls the first battery to be stopped charging or the charging current of the first battery to be reduced; and/or the charging current of the second battery to be increased;
(2) when the pressure value is reduced to a third preset threshold, the battery management system controls the first battery to be charged again or the charging current of the first battery to be increased;
and/or the charging current of the second battery to be reduced or the second battery to be stopped charging.

The (1) and (2) are repeated until a preset SOC state (e.g., SOC 100%) is reached.

The charging program can be adjusted and expanded by the skilled person according to the principles, and details are not described herein.

In some specific embodiments, the charging current of the first battery may be reduced. In some specific embodiments, the charging current of the first battery can be reduced and the charging current of the second battery can be increased simultaneously. It will be understood that the charging and discharging main lines for charging and discharging each battery are arranged with an adjustable resistor at each battery port, so the resistor can be adjusted according to the current command distributed by the BMS to achieve the purpose of flexibly adjusting the charging and discharging current of each battery. The charging program can be adjusted and expanded by the skilled person according to the principles, and details are not described herein. In other specific embodiments, when the battery assembly includes the first battery system and the second battery system, the charging and discharging main lines for charging and discharging each first battery system and second battery system are arranged with the adjustable resistor at each battery system port, so the resistor may be adjusted according to the current command distributed by the BMS to achieve the purpose of flexibly adjusting the charging and discharging current of each battery system.

In some embodiments of the present disclosure, the first battery and the second battery are discharged simultaneously, and when the pressure value of the battery assembly reaches the second preset threshold, the battery management system is configured to stop discharging of the second battery or to adjust the discharging current of the second battery to be less than the current discharging current (to reduce the discharging current of the second battery); and/or to increase the discharging current of the first battery. Exemplarily, when the pressure value reaches the second preset threshold, the following options can be selected: (1) stop discharging the second battery; (2) stop discharging the second battery and increase the discharging current of the first battery at the same time; (3) reduce the discharging current of the second battery; (4) reduce the discharging current of the second battery and increase the discharging current of the first battery; and (5) do not adjust the charging state of the second battery, increase the discharging current of the first battery. In some specific embodiments, when the discharging current of the second battery is reduced and the discharging current of the first battery is increased, the total discharging current of the battery assembly is controlled to be constant during the discharging process.

It will be understood that, after the discharging strategy is adjusted, the internal pressure of the battery assembly is reduced, but if the internal pressure of the battery assembly is too low, the battery management system can be controlled to discharge the second battery again or to increase the discharging current of the second battery; and/or to reduce the discharging current of the first battery or to stop discharging of the first battery. Specifically, as an example, the following options can be selected:
(1) the first battery and the second battery are discharged simultaneously, when the pressure value reaches the second preset threshold, the battery management system is configured to stop discharging of the second battery or to reduce the discharging current of the second battery; and/or to increase the discharging current of the first battery;
(2) when the pressure value decreases to a fourth preset threshold, the battery management system is configured to discharge the second battery again or increases the discharging current of the second battery;
and/or the discharging current of the first battery to be reduced or the first battery to be stopped discharging.

The (1) and (2) are repeated until a preset SOC state (e.g., SOC 100%) is reached.

The charging program can be adjusted and expanded by the skilled person according to the principles, and details are not described herein.

In the present disclosure, the first preset threshold and the second preset threshold can be equal or unequal.

In some embodiments of the present disclosure, the charging of the battery assembly may include the following steps:
S01, when the pressure value of the battery assembly reaches the first preset threshold during the charging of the first battery, the battery management system is configured to stop charging the first battery; and
S02, the second battery is charged.

In some cases, S02 includes: when the pressure value of the battery assembly is lower than a third preset threshold during the charging of the second battery, the battery management system is configured to stop charging the second battery and recharge the first battery again; at this time, the S01 and S02 are repeated until the state of charge reaches a preset value (e.g., SOC 100%). Among them, the first preset threshold and the third preset threshold can be equal or unequal.

It will be understood that the first battery expands during charging causing compression inside the battery assembly. When the first battery is stopped and the second battery is charged, the second battery starts to contract in volume, and the battery assembly releases space. In this way, the first battery may be charged again, and the cycle is continuously repeated until the battery assembly is fully charged. Similarly, the charging program can be adjusted and expanded by the skilled person according to the principles, and details are not described herein again.

In other specific embodiments, when the battery assembly is charged, the following steps may be included:
S01', the second battery is charged; and
S02', the first battery is charged; the battery management system stops charging the first battery when the pressure value of the battery assembly reaches a first preset threshold. The S01' and S02' are repeated until the state of charge reaches a preset value (e.g., SOC 100%).

In some embodiments of the present disclosure, during discharging, the second battery is discharged first under the control of the battery management system, and the battery management system stops discharging the second battery and discharges the first battery when the pressure value of the battery assembly reaches a second preset threshold. Similarly, the discharging program can be adjusted and expanded by the skilled person according to the principles, and details are not described herein again.

In some embodiments of the present disclosure, when the cycle life of the first battery is greater than the cycle life of the second battery, the battery management system controls the first battery to be discharged preferentially over the second battery. In this way, the battery assembly may withstand more charge and discharge cycles and has a longer service life, thereby being more conducive to providing a power vehicle with strong endurance and stable endurance. Specifically, the battery assembly is controlled the first battery to be discharged preferentially over the second battery specifically means that, in the same charge-discharge cycle, the first and second battery are both involved in charging and discharging, but the first battery is "deeply charged and deeply discharged" and the second battery is "shallowly charged and shallowly discharged". For example, the first battery may be charged to SOC 100% and then discharged to SOC 10%, and the second battery can be charged to SOC 60% and then discharged to SOC 30%. In this way, the overall lifespan of the battery assembly is ensured, and the internal pressure of the battery assembly is controlled within a small range of variation or even constant.

In some other embodiments, when the cycle life of the second battery is greater than the cycle life of the first battery, the battery management system controls the second battery to be discharged preferentially over the first battery. In this case, the second battery may be "deeply charged and deeply discharged", and the first battery may be "shallowly charged and shallowly discharged", which details are not described herein again.

As shown in FIG. 5, the embodiment of the present disclosure further provides a power consumption device including the battery assembly provided by the embodiment of the present disclosure. The power consumption device includes but is not limited to an energy storage device, a vehicle, or an electronic product. For example, when the power consumption device is a vehicle, the vehicle may have a longer endurance time and stable endurance due to the battery assembly provided by the embodiment of the present disclosure, thereby solving the pain point of consumer "mileage anxiety" and having strong market competitiveness.

The following embodiments further illustrate the technical solutions of the present disclosure.

### Embodiment 1

(1) Preparation of the first battery: the first positive electrode plate and the first negative electrode plate are alternately stacked with the separator to obtain a first bare battery cell, and the first positive electrode plate and the first negative electrode plate are separated by the separator. Among them, the first positive electrode plate comprises a first positive electrode current collector (specifically, aluminum foil) and a first positive electrode active material layer arranged on the surface of the first positive electrode current collector, and the first positive electrode active material layer comprises positive electrode active material (specifically, NCM622), a binder (specifically, PVDF) and a conductive agent (specifically, acetylene black and carbon fiber) with a mass ratio of 960:30:(5+5). The first negative electrode plate is a carbon-silicon negative electrode plate comprising a first negative electrode current collector (specifically, copper foil) and a first negative electrode active material layer arranged on the surface of the first negative electrode current collector, and the first negative electrode active material layer comprises negative electrode active material (specifically, silicon-carbon composite), a binder (specifically, sodium carboxymethyl cellulose) and a conductive agent (specifically, acetylene black and carbon fiber) with a mass ratio of 50:30:20;
the first bare battery cell is placed in an aluminum-plastic film outer package, and electrolyte is injected. The electrolyte is a 1.3 M LiFSI organic solution, wherein the organic solution is dimethoxyethane and 1,1,2,2-tetrafluoroethyl-2,2,3,3-tetrafluoropropyl ether (TTE) with a volume ratio of 2:8. After vacuum sealing, the first battery is obtained by standing at 60°C for 48 hours, being pressurized formation at 45°C, secondary packaging, venting and capacity grading.

(2) Preparation of the second battery: the second positive electrode plate and the second negative electrode plate are alternately stacked with the separator to obtain a second bare battery cell, and the second positive electrode plate and the second negative electrode plate are separated by the separator.

The second positive electrode plate prepared from a sulfur-carbon composite and a lithium metal second negative electrode plate are alternately stacked with the separator to obtain a bare battery cell, and the second positive electrode plate and the second negative electrode plate are separated by the separator. Among them, the second positive electrode plate comprises a second positive electrode current collector (specifically, aluminum foil) and a second positive electrode active material layer arranged on the surface of the second positive electrode current collector, and the second positive electrode active material layer comprises a sulfur-containing material (specifically, lithium sulfide), a carbon material (specifically, carbon nanotube), a binder (specifically, PVDF) and a conductive agent (specifically, Super P) with a mass ratio of 6:2:1:1.

The second bare battery cell is placed in an aluminum-plastic film outer packaging body, and an electrolyte is injected. The electrolyte is a 1.3 M LiFSI organic solution, wherein the organic solution is dimethoxyethane and 1,1,2,2-tetrafluoroethyl-2,2,3,3-tetrafluoropropyl ether with a volume ratio of 2:8; after vacuum sealing, the second battery is obtained by standing at 60°C for 48 hours, being pressurized formation at 45°C, secondary packaging, venting and capacity grading.

(3) Preparation of the battery assembly: 20 first batteries are connected in series to form a first battery unit battery assembly, and 40 second batteries are connected in series to form a second battery unit battery assembly, wherein one first battery unit battery assembly and one second battery unit battery assembly are arranged in the Y direction of the battery tray (i.e. the direction perpendicular to the driving direction and the height direction of the vehicle when the battery assembly is mounted on the vehicle), the first battery and the second battery are separated by a baffle, and the first battery assembly and the second battery are connected in series; a pressure sensor is arranged on the baffle between the first battery and the second battery, and a signal acquisition device is arranged in the battery assembly.

(4) The battery assembly is subjected to a 1C/1C charge-discharge cycle test at a temperature of 25°C, and the voltage range is 4.3V to 3.0V; the charging process includes the following steps:
The first battery and the second battery are charged simultaneously, when the pressure value of the battery assembly reaches a first preset value, under the control of the battery management system, the charging current of the first battery is reduced and the charging current of the second battery is increased, so the pressure value of the battery assembly returns to the appropriate pressure range, if the pressure value of the battery assembly is too low, the charging current of the first battery is increased and the charging current of the second battery is reduced, until the state of charge of the battery assembly is 100%.

(5) The battery assembly is subjected to a 1C/1C current charge-discharge cycle test at a temperature of 25°C, and discharged at a voltage range of 4.3V to 3.0V: the first battery and the second battery are simultaneously discharged, when the pressure value measured by the pressure sensor arranged on the inner baffle of the battery assembly reaches the second preset value, under the control of the battery management system, the discharge current of the second battery is reduced and the discharge current of the first battery is increased, so the overall current of the battery assembly is still stable at 1C, and the pressure of the battery assembly returns to the appropriate pressure range, if the pressure value of the battery assembly is too low, the discharge current of the first battery is reduced and the discharge current of the second battery is increased, so the overall current of the battery assembly is still stable at 1C, until the voltage reaches 3.0 V.

(6) Using the step (4) and (5) as a cycle, conduct a cycle charge-discharge test, when the total battery capacity of the battery assembly is reduced to 80%, record the number of cycles of the battery assembly at this time, that is, the cycle life of the battery assembly, and the results are summarized in Table 1.

In order to highlight the beneficial effects of the embodiment of the present disclosure, the following comparative examples are arranged.

### Comparative Example 1

The difference from Embodiment 1 is that the battery assembly of Comparative Example 1 has only three first batteries, and a pressure sensor is arranged at both ends of each first battery.

### Comparative Example 2

The difference from Embodiment 1 is that the battery assembly of Comparative Example 2 has only two second batteries, and a pressure sensor is arranged at both ends of each battery.

Comparative Example Battery Normal Temperature Cycle Test: the initial internal pressure of Embodiment 1, Comparative Example 1 and Comparative Example 2 is 0 MPa, the comparative example battery assembly is subjected to a 1C/1C charge-discharge cycle test at 25°C, and the voltage range is 4.3V to 3.0V, and the pressure change value in the internal of each battery assembly during the cycle process is recorded. When the cycle capacity retention rate of each battery assembly is lower than 80%, the cycle number of each battery assembly at this time is recorded as the cycle life of the battery assembly, and the results are summarized in Table 1.

**Table 1 Summary of Test Results for the Embodiment 1 and Various Comparative Example of Battery Assembly**

| Experiment number | Internal pressure of battery assembly after 50 cycles | Cycle life/(times) |
|---|---|---|
| Embodiment 1 | Change within 0.4MPa-2Mpa | 600 |
| Comparative example 1 | Change within 2.5MPa-4MPa | 450 |
| Comparative example 2 | Change within 0-0.1MPa | 120 |

As can be seen from the data in Table 1, the internal pressure of the battery assembly of Embodiment 1 changes within 0.4MPa to 2MPa during the charging and discharging process, and the cycle life of the battery assembly of Embodiment 1 may reach 600 times, indicating that the battery assembly of Embodiment 1 may control its internal pressure in a suitable range for a long time during the charging and discharging cycle process, thereby prolonging the service life of the battery assembly. In particular, when the battery assembly of Comparative Example 1 is fully charged, since the battery assembly is prepared from a silicon negative electrode, that is, the silicon-carbon negative electrode active material is used, the overall volume expansion rate of the battery assembly still reaches 30%. Therefore, when the cycle number is less than 450 times, the internal pressure of the battery assembly of Comparative Example 1 is large, which affects the actual charging and discharging performance of the battery assembly, and further affects the service life of the battery assembly of Comparative Example 1. When the battery assembly of Comparative Example 2 is fully charged, since the positive electrode of the battery assembly is lithium sulfide, even if the carbon nanotube is used as the positive electrode framework, the overall volume contraction of the battery still reaches 20%. Therefore, the reduction of the internal pressure of the battery assembly of Comparative Example 2 not only affects the fitting of the battery electrode sheet and reduces the charging and discharging capacity of the battery assembly, but also increases the negative electrode pulverization effect due to the reduction of the internal pressure, thereby reducing the service life of the battery assembly and increasing the safety problem of the battery assembly.

In the description of the present disclosure, the meaning of "a plurality of" is at least two, for example, two, three, etc., unless otherwise specifically limited.

The above describes some embodiments of the present disclosure, and it should be noted that for a person of ordinary skill in the art, a number of improvements and embellishments may be made without departing from the principles of the present disclosure, which are also regarded as the scope of protection of the present disclosure.

## Claims

1. A battery assembly, comprising:
a first battery, the first battery expanding during charging and contracting during discharging; and
a second battery, the second battery contracting during charging and expanding during discharging.

2. The battery assembly according to claim 1, wherein the first battery comprises a first positive electrode and a first negative electrode, the first negative electrode comprises a first negative electrode active material, and the first negative electrode active material comprises at least one of elemental lithium, lithium alloy, and silicon-based negative electrode material.

3. The battery assembly according to claim 2, wherein the first positive electrode comprises a first positive electrode active material, and the first positive electrode active material comprises one or more of layered oxide and polyanion material.

4. The battery assembly according to any one of claims 1 to 3, wherein the second battery comprises a second positive electrode and a second negative electrode, the second positive electrode comprises a second positive electrode active material, the second positive electrode active material comprises one or more of elemental sulfur and sulfur-containing compound, the sulfur-containing compound comprises one or more of Li₂S, Mo₆S₈, CuS, MnS, FeS₂, CoS₂, NiS₂, Fe_{0.5}Co_{0.5}S₂, and sulfurized polyacrylonitrile; and
the second negative electrode comprises a second negative electrode active material, the second negative electrode active material comprises elemental lithium and/or lithium alloy; wherein the lithium alloy comprises one or more of lithium boron alloy, lithium magnesium alloy, lithium aluminum alloy, lithium tin alloy, lithium germanium alloy, lithium gallium alloy, lithium indium alloy, lithium antimony alloy, lithium indium alloy, lithium zinc alloy, lithium lead alloy, lithium bismuth alloy.

5. The battery assembly according to any one of claims 1 to 4, wherein the first battery and the second battery both contain an electrolyte, the electrolyte in the first battery and the second battery both comprise a solvent, the solvent of the electrolyte in the first battery and the solvent of the electrolyte in the second battery each independently comprises an ether solvent, the ether solvent comprises at least one of non-halogenated ether solvent and fluorinated ether solvent;
wherein, the non-halogenated ether solvent comprises one or more of diethylene glycol dimethyl ether, ethylene glycol dimethyl ether, dipropylene glycol dimethyl ether, tripropylene glycol monomethyl ether, and tetraethylene glycol dimethyl ether; and the fluorinated ether solvent comprises 1,1,2,2,-tetrafluoroethyl ether, 1,1,2,2,-tetrafluoroethyl-2,2,3,3-tetrafluoropropyl ether, hexafluoroisopropyl ether, tetrafluoroethyl tetrafluoropropyl ether, 2,2,2-trifluoroethyl ether, 1,1,2,2-tetrafluoroethyl-2,2,2-trifluoroethyl ether, difluoromethyl-2,2,3,3-tetrafluoropropyl ether, 2,2,3,3,3-pentafluoropropyl ether, 1,1,2,3,3,3-hexafluoropropyl ethyl ether, 1,1,2,3,3,3-pentafluoropropyl difluoromethyl ether, 1,1,2,2-tetrafluoroethyl-2,2,3,3-tetrafluoropropyl ether, 1H, 1H,5H-octafluoropentyl-1, 1,2,2-tetrafluoroethyl ether, bis(2,2,2-trifluoroethyl) ether, and bis(2,2-difluoroethyl) ether.

6. The battery assembly according to any one of claims 1 to 5, wherein the battery assembly comprises a plurality of the first batteries connected in series, and/or a plurality of the second batteries connected in series.

7. The battery assembly according to any one of claims 1 to 6, wherein the first battery and the second battery are arranged alternately.

8. The battery assembly according to any one of claims 1 to 6, wherein the battery assembly is formed with a receiving cavity, the receiving cavity comprises a first sub-receiving cavity and a second sub-receiving cavity, the first battery is arranged in the first sub-receiving cavity, and the second battery is arranged in the second sub-receiving cavity.

9. The battery assembly according to any one of claims 1 to 6, wherein the battery assembly is formed with a receiving cavity, the battery assembly comprises at least one first battery system and at least one second battery system, each first battery system comprises a plurality of the first batteries, each second battery system comprises a plurality of the second batteries, and the at least one first battery system and the at least one second battery system are arranged in the receiving cavity.

10. The battery assembly according to any one of claims 1 to 9, wherein the battery assembly further comprises:
a detection device configured to detect a predetermined parameter to obtain a pressure of the first battery and/or the second battery; and
a battery management system configured to regulate a charging strategy and/or a discharging strategy of the first battery and/or the second battery according to the pressure.

11. The battery assembly according to claim 10, wherein the battery assembly comprises a housing, and the first battery and the second battery are arranged in the housing; and the detection device is arranged between the first battery and/or the second battery and the housing, and/or between the first battery and the second battery.

12. The battery assembly according to claim 10 or 11, wherein the detection device is a pressure sensor configured to monitor the pressure generated by an expansion force of the first battery and/or the second battery.

13. The battery assembly according to any one of claims 10 to 12, wherein during charging and discharging of the battery assembly, the battery management system is configured to adjust a state of charge of the first battery and/or the second battery according to the pressure, to ensure that the pressure is less than a preset threshold.

14. The battery assembly according to any one of claims 10 to 12, wherein when the first battery and the second battery are simultaneously charged, when the pressure reaches a first preset threshold, the battery management system is configured to stop charging the first battery, or to reduce a charging current of the first battery; and/or to increase a charging current of the second battery.

15. The battery assembly according to any one of claims 10 to 12, wherein when the first battery and the second battery are simultaneously discharged, when the pressure reaches a second preset threshold, the battery management system is configured to stop discharging the second battery, or to reduce a discharging current of the second battery; and/or to increase a discharging current of the first battery.

16. The battery assembly according to any one of claims 10 to 15, wherein charging the battery assembly comprises the following steps:
(1) when the pressure value of the battery assembly reaches a first preset threshold during charging of the first battery, the battery management system is configured to stop charging the first battery; and
(2) when the pressure value of the battery assembly is lower than a third preset threshold during charging of the second battery, the battery management system is configured to stop charging the second battery and recharge the first battery again;
the step (1) and the step (2) being repeated until the state of charge of the battery assembly reaches a preset value.

17. The battery assembly according to any one of claims 10 to 15, wherein charging the battery assembly comprises the following steps:
(a) the second battery being charged;
(b) the first battery being charged; when the pressure value of the battery assembly reaches a first preset threshold, the battery management system is configured to stop charging the first battery; the step (a) and (b) being repeated until the state of charge of the battery assembly reaches a preset value.

18. The battery assembly according to any one of claims 10 to 17, wherein the first battery has a cycle life longer than that of the second battery, and the battery management system controls the first battery to be discharged preferentially to the second battery.

19. The battery assembly according to any one of claims 1 to 18, wherein the pressure inside the battery assembly is constant during charging and discharging of the battery assembly.

20. An electric device, wherein the electrical device has the battery assembly according to any one of claims 1 to 19.
